# EUROPEAN PATENT APPLICATION

(11) **EP 4 796 926 A2**
(43) Date of publication of application: **26.08.2026**
(21) Application number: 26159654.8
(22) Date of filing: 19.02.2026
(51) Int. Cl.: G01N 30/60

(54) **MULTIFUNCTIONAL CLIP FOR A CHROMATOGRAPHY COLUMN**

(30) Priority: 21.02.2025 US 202563761467 P
(71) Applicant: Diba Industries, Inc., Danbury, CT 06810 (US)
(72) Inventor: SIMPSON, Allan Clive, Danbury, Connecticut 06810 (US); WRIGHT, Paul Justin, Danbury, Connecticut 06810 (US)
(74) Representative: Wittmer, Maximilian

(57) **Abstract**

A chromatography column (100) comprises a main tube assembly (110) comprising a main tube (111) extending from an inlet end (114a) of the main tube assembly (110) to an outlet end (114b) of the main tube assembly (110), an inlet adapter assembly (120) coupled to the inlet end (114a) of the main tube assembly (110), an outlet adapter assembly (130) coupled to the outlet end (114b) of the main tube assembly (110), and a clip (162) comprising: an upper surface (162a); a lower surface (162b) opposite the upper surface (162a); a tube gripping portion (164) comprising a bore (165) that extends from the upper surface (162a) to the lower surface (162b), wherein receipt of the main tube (111) within the bore (165) of the tube gripping portion (164) secures the clip (162) to the main tube (111).

## Description

### FIELD

The present disclosure is generally directed to chromatography columns and, more particularly, to a multifunctional clip for a chromatography column.

### TECHNICAL BACKGROUND

Liquid chromatography, typically performed using chromatography columns, is a widely used technique for separating components of a mixture. The separation occurs based on the differing interactions in which each component of the mixture has with mobile and stationary phases employed in the technique. The mobile phase carrying the mixture is forced to migrate through the stationary phase, which effects separation of components in the mixture. Owing to the many different combinations of stationary and mobile phases that can be utilized, the technique is versatile and can be used in an array of applications of varying scales from microscale separations in analytical chemistry to large-scale industrial purifications.

Chromatography columns typically incorporate a main tube with one end serving as a fluid inlet that allows for the delivery of the sample in the mobile phase, and the other end serving as a fluid outlet that allows for the fractionated sample, carried by the eluent, to exit the column. The main tube is capped at each end and functions as a reservoir for containing the stationary phase. The stationary phase is loaded via a process called packing to form a packed bed, and typically comprises alumina, silica, or synthetic or natural polymer gel resin beads ranging in size from one micron to several hundred microns in diameter. However, while chromatography columns are widely used to carry out separations, challenges remain with respect to the operation, handling, storage, and transportation of the columns.

During typical operation of a chromatography column, liquid, typically from a single tube, is introduced to the column and distributed over the surface of the packed bed. When a desired flow of liquid is established through the packed bed, a bolus of sample (a mixture of desired components and contaminants) is introduced into the flow and then enters the chromatography column. This bolus is in the form of a column of sample liquid that enters the head of the packed bed at a particular height. Due to the variable nature of chromatographic stationary phases and the separations that may be carried out using these stationary phases, the height of the packed bed must be adjusted accordingly to achieve adequate separation performance. Conventionally, a user will mark the outer surface of the column using a marker (e.g., a sharpie) and attempt to adjust the bed height to the height indicated by the mark. However, this creates a source for user error as the column may be incorrectly marked thereby resulting in an incorrect bed height. Further, these marks must be removed and reapplied each time a different bed height is required and may inadvertently be rubbed off via typical handling of the chromatography column.

### SUMMARY

The present application addresses the above-described challenges by providing a multifunctional clip which serves several useful purposes with respect to the operation, handling, storage, and transportation of the columns. For example, the clip that can adjusted to the appropriate position on the column to indicate a desired bed height, thereby avoiding the need for users to place markings on the side of the column. Moreover, as chromatography columns are commonly laid down on a table (particularly when disassembled), the clip described herein serves the additional purpose of preventing the main tube of the chromatography column from rolling off a surface (e.g., a table) onto the floor which may cause the column to sustain damage or compromise the integrity of the packed bed.

The multifunctional clip described herein also addresses an issue related to the ease of use and storage of chromatography columns. Chromatography columns are often provided with fluidic fittings and sealing caps that facilitate the use and storage of the chromatography column. Fluidic fittings facilitate connection between the column's inlet and outlet tubes and other components of chromatographic systems, such as pumps, sample detectors, or analysers. However, when the inlet and outlet tubes are disconnected from the chromatographic system for storage and/or shipping purposes, it is crucial that the integrity of the packed column be maintained, and that requires ensuring that the contents of the packed column are retained therein. Accordingly, sealing caps are used to close off the ends of the fluid inlet and outlet tubes, thereby creating a liquid-tight system. Embodiments of the multifunctional clip described herein contain an inlet tube retainer and outlet tube retainer configured to secure end portions of the inlet tube and outlet tube, respectively. In embodiments, the inlet and outlet tube retainers are sized such that the inlet and outlet tube sealing caps may be pressed therein to create an interference fit which keeps the tubes in a position where the risk of damage is reduced. Moreover, when the fluidic fittings are connected to other components of chromatographic systems (e.g., pumps, detectors, or analysers), the sealing caps may be retained in the inlet and outlet tube retainers thereby preventing them from being lost while the chromatography column is in use. Accordingly, the multifunctional clip of the present disclosure performs several important functions for the operation, handling, storage, and transportation of a chromatography column.

Some embodiments of the present disclosure are directed to a chromatography column comprising a main tube assembly comprising a main tube extending from an inlet end of the main tube assembly to an outlet end of the main tube assembly, an inlet adapter assembly coupled to the inlet end of the main tube assembly, an outlet adapter assembly coupled to the outlet end of the main tube assembly, and a clip comprising, an upper surface, a lower surface opposite the upper surface, a tube gripping portion comprising a bore that extends from the upper surface to the lower surface, wherein receipt of the main tube within the bore of the tube gripping portion secures the clip to the main tube.

Embodiments are also directed to a clip comprising an upper surface, a lower surface opposite the upper surface, a tube gripping portion comprising a bore that extends from the upper surface to the lower surface, an inlet tube retainer comprising a second bore that extends through the clip, and an outlet tube retainer comprising a third bore that extends through the clip.

Additional features and advantages of the embodiments described herein will be set forth in the detailed description which follows, and in part will be readily apparent to those skilled in the art from that description or recognized by practicing the embodiments described herein, including the detailed description which follows as well as the appended drawings.

It is to be understood that both the foregoing general description and the following detailed description describe various embodiments and are intended to provide an overview or framework for understanding the nature and character of the subject matter of the present disclosure. The accompanying drawings are included to provide a further understanding of the various embodiments, and are incorporated into and constitute a part of this specification. The drawings illustrate the various embodiments described herein, and together with the description serve to explain the principles and operations of the subject matter of the present disclosure.

### BRIEF DESCRIPTION OF THE DRAWINGS

The embodiments set forth in the drawings are illustrative and exemplary in nature and not intended to limit the subject matter of the present disclosure. The following detailed description of the illustrative embodiments can be understood when read in conjunction with the following drawings, where like structure is indicated with like reference numerals and in which:
FIG. 1 schematically depicts a chromatography column, according to one or more embodiments described herein;
FIG. 2 schematically depicts a chromatography column provided with a multifunctional clip, according to one or more embodiments described herein;
FIG. 3 schematically depicts a multifunctional clip, according to one or more embodiments described herein;
FIG. 4 schematically depicts the multifunctional clip shown in FIG. 3 when it is attached to the main tube of a chromatography column and retaining sealing caps, according to one or more embodiments described herein; and
FIG. 5 is a side view of the multifunctional clip shown in FIG. 3 when it is attached to the main tube of a chromatography column, and wherein a fluidic fitting has been attached to a sealing cap retained within the multifunctional clip, according to one or more embodiments described herein.

### DETAILED DESCRIPTION

Reference will now be made in greater detail to various embodiments, some embodiments of which are illustrated in the accompanying drawings. Whenever possible, the same reference numerals will be used throughout the drawings to refer to the same or similar parts.

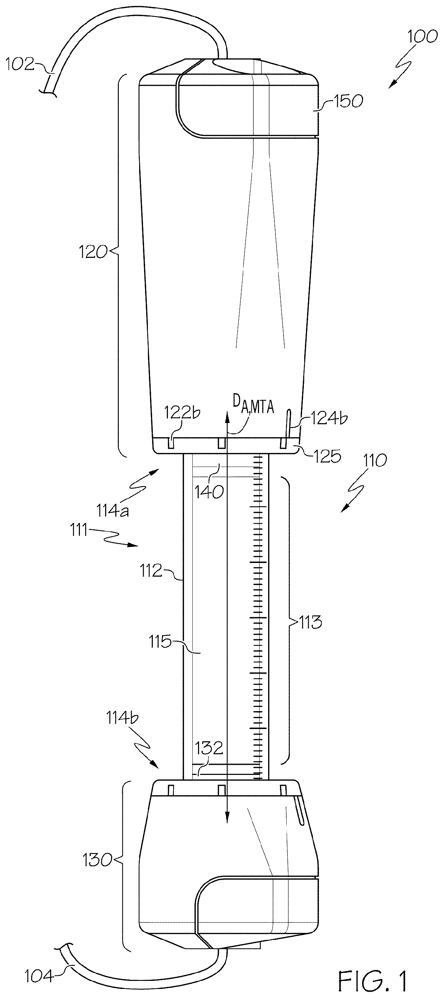

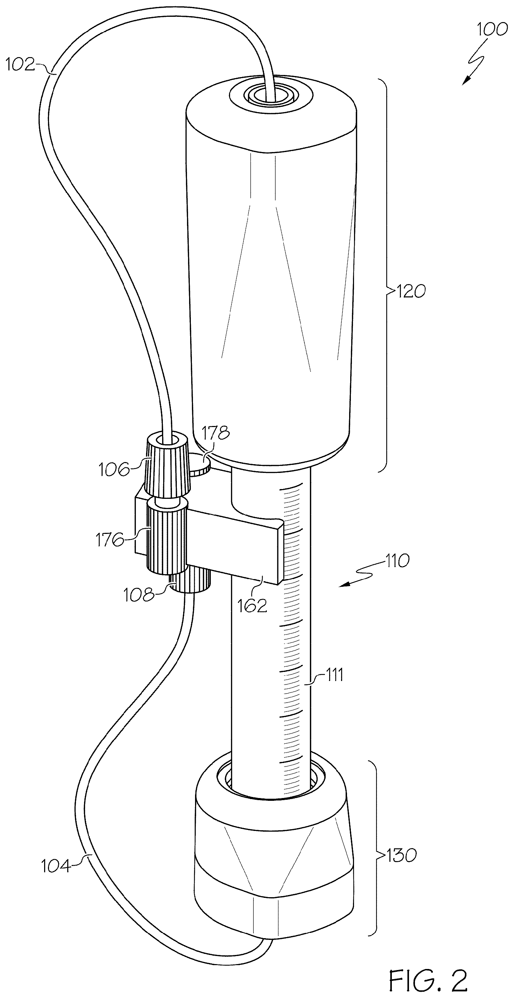

Referring now to FIGS. 1 and 2, an embodiment of a chromatography column is now discussed in detail. The chromatography column 100 comprises a main tube assembly 110, an inlet adapter assembly 120, an outlet adapter assembly 130, and a clip 162. The main tube assembly 110 comprises a main tube 111 having a tubular sidewall 112 extending between an inlet end 114a of the main tube assembly 110 and an outlet end 114b of the main tube assembly 110, wherein the outlet end 114b is opposite the inlet end 114a along an axial direction D_{A,MTA} of the main tube assembly 110. The axial direction D_{A,MTA} of the main tube assembly 110 may be defined by a central axis of the main tube 111. The tubular sidewall 112 comprises an inner surface and an outer surface. The inlet adapter assembly 120 comprises an inlet endpiece 140 and the outlet adapter assembly 130 comprises an outlet endpiece 132, which together with the inner surface of the tubular sidewall 112, define a reservoir 113 within the main tube 111 for containing a stationary phase 115. The stationary phase 115 may be contained within the reservoir 113 between an inlet porous support plate coupled to the inlet endpiece 140 and an outlet porous support plate coupled to the outlet endpiece 132. The stationary phase 115 may be loaded via a process called packing to form a packed bed, and typically comprises alumina, silica, or synthetic or natural polymer gel resin beads ranging in size from one micron to several hundred microns.

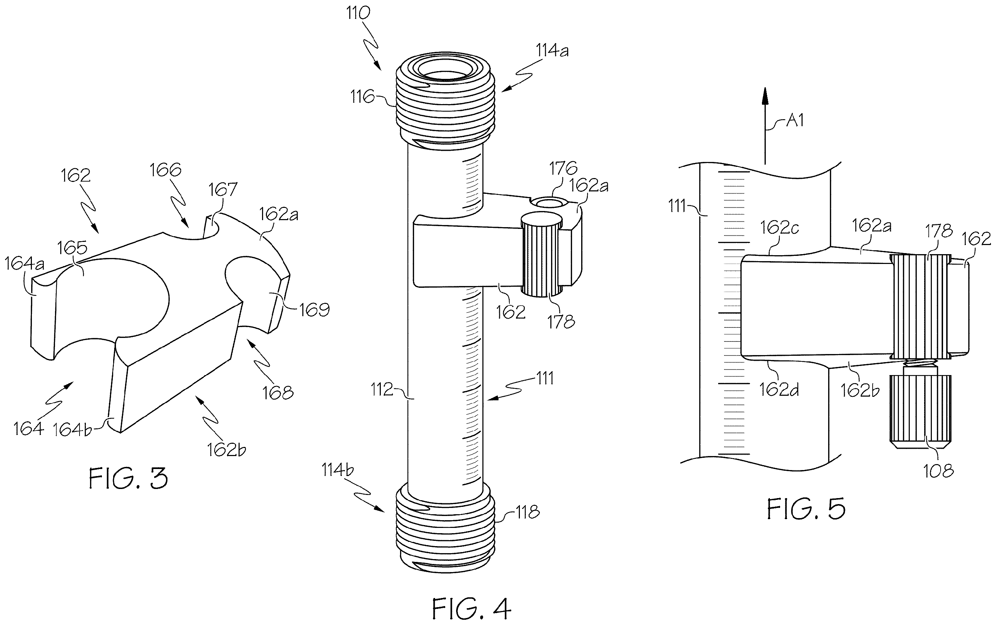

The main tube assembly 110 may further comprise an inlet retainer 116 (see FIG. 4) coupled to the main tube 111 at the inlet end 114a and an outlet retainer 118 (see FIG. 4) coupled to the main tube 111 at the outlet end 114b. The inlet retainer 116 is configured for connection (e.g., threaded connection) with the inlet adapter assembly 120. The outlet retainer 118 is configured for connection (e.g., threaded connection) with the outlet adapter assembly 130 and may be structurally identical to the inlet retainer 116. The chromatography column 100 may further comprise an inlet tube 102 in fluid connection with the inlet adapter assembly 120 and an outlet tube 104 in fluid connection with the outlet adapter assembly 130. The inlet tube 102 is configured to deliver fluid (e.g., a mixture in a mobile phase) to the inlet adapter assembly 120, which then delivers the fluid to the reservoir 113. In operation, the fluid introduced to the main tube assembly 110 is forced to migrate through the stationary phase 115, which effects separation of components within a mixture contained in the fluid. Once the mixture has been delivered to the reservoir, additional mobile phase liquid (e.g., buffer or solvent) may be delivered to and through the main tube assembly 110 to further effect separation of components within the mixture. The outlet tube 104 receives the fractionated mixture, carried by the eluent, from the outlet adapter assembly 130 as it exits the reservoir 113.

Referring now to FIGS. 2-5, the clip 162 comprises an upper surface 162a, a lower surface 162b, and a tube gripping portion 164 comprising a bore 165 that extends from the upper surface 162a to the lower surface 162b, wherein receipt of the main tube 111 within the bore 165 secures the clip to the main tube 111 of the chromatography column 100. The material and the dimensions of the tube gripping portion 164 may be selected in view of characteristics of the main tube 111 such that an interference achieved between the tube gripping portion 164 and the main tube 111 allows the clip 162 to be securely attached to the main tube 111. The level of interference may be set so as to permit a user to adjust of the position of the clip 162 to a different column height or angular orientation via application of the appropriate amount of force. The geometry of the bore 165 may be complementary to the outer surface of the main tube 111 such that the clip 162 may be secured to the main tube 111 via an interference fit between the tube gripping portion 164 and the main tube 111. In some embodiments, the bore 165 of the tube gripping portion may be an open-sided bore forming a partial cylindrical recess extending through the clip, as shown for the embodiment depicted in FIGS. 2-5. For example, the surface defining the bore 165 may be a partial cylindrical segment that makes up from about 180° to about 270° of a full cylinder, such at from about 190° to about 270° of a full cylinder, 200° to about 270° of a full cylinder, or 210° to about 270° of a full cylinder. However, in some embodiments, the shape of the bore 165 of the tube gripping portion 164 is not perfectly cylindrical, which may help accommodate tolerances in the outer diameter of the main tube 111. Further, the bore 165 may comprise contacting surfaces (e.g., three contacting surfaces) to assist with locating the main tube 111 therein.

The tube gripping portion 164 may be made of any suitable material for achieving this interference fit, including, but not limited to, polymeric materials such as polyether ether ketone (PEEK), ethylene-based polymers, propylene-based polymers (including glass-filled polypropylene), nylon, acrylonitrile butadiene styrene. Accordingly, in some embodiments, the clip 162 comprises a polymeric material. In some specific embodiments, the polymeric material may be selected from the group consisting of polyether ether ketone (PEEK), ethylene-based polymers, propylene-based polymers (including glass-filled polypropylene), nylon, acrylonitrile butadiene styrene. In some embodiments, the entire clip 162 may be formed from the same material. The combination of the geometry of the bore 165 and the material of the tube gripping portion 164 may allow arms 164a and 164b of the tube gripping portion to flex outwards for insertion of the main tube 111 within the bore 165 of the tube gripping portion 164. Moreover, when the tube gripping portion 164 is attached to the main tube 111, the friction associated with the interference between the tube gripping portion 164 and the main tube 111 may prevent the chromatography column 100, or just the main tube assembly 110 (e.g., when the chromatography column 100 is disassembled), from rolling when it is laid down on a surface. Accordingly, the clip 162 helps to prevent accidental damage caused by the chromatography column 100 or main tube assembly 110 rolling off of a surface, such as a table, for example.

The clip 162 may further function as a bed height indicator for marking a target bed height for the chromatography column 100. In embodiments, the upper surface 162a and/or the lower surface 162b of the clip 162 may define a flat edge that is oriented perpendicular to the central axis A1 of the main tube 111 when the clip 162 is secured to the main tube 111. For example, with reference to FIG. 5, the clip 162 may comprise an first flat edge 162c and a second flat edge 162d, each of which is oriented perpendicular to the central axis A1 when the clip 162 is secured to the main tube 111 (i.e., the flat edge lies within a plane that is perpendicular to the central axis). In this embodiment, the first flat edge 162c may correspond to a relatively tall bed height while the second flat edge 162d may correspond to a relatively short bed height. As noted above, a user may manually adjust the axial position of the clip 162 by sliding it up and down the main tube 111 until the desired bed height is indicated by either of the first or second flat edges 162c, 162d. Further, as shown in FIGS. 4 and 5, the main tube 111 may be provided with bed height graduations to assist the user in identifying and setting the clip 162 to the desired axial position on the main tube 111.

The clip 162 may further comprise an inlet tube retainer 166 configured to secure an end portion of the inlet tube 102 and an outlet tube retainer 168 configured to secure an end portion of the outlet tube 104. When the chromatography column 100 is not in use, the inlet tube retainer 166 and outlet tube retainer 168 of the clip 162 may be used to secure end portions of the inlet tube 102 and outlet tube 104, respectively, thereby allowing the chromatography column to be maintained in a more organized state with less risk of damage to the inlet and outlet tubes.

In embodiments, the inlet tube retainer 166 and the outlet tube retainer 168 comprise respective bores that extend from the upper surface 162a to the lower surface 162b. For example, with reference to FIG. 3, the inlet tube retainer 166 may comprise a second bore 167 and the outlet tube retainer 168 may comprise a third bore 169, each extending through the clip 162 from the upper surface 162a to the lower surface 162b. However, in other embodiments, one or both of the inlet tube retainer 166 and the outlet tube retainer 168 may comprise bores that extend through the clip in a different direction. For example, the bores of one or both of the inlet tube retainer 166 and the outlet tube retainer 168 may extend laterally with respect to the central axis A1 of the chromatography column 100 (when the clip 162 is attached to the main tube), or in a direction normal to a plane defined by the central axis A1 and the lateral direction.

The chromatography column 100 may further comprise an inlet tube fluidic fitting 106 and an outlet tube fluidic fitting 108, which may be used to fluidly connect the inlet tube 102 and outlet tube 104, respectively, to other components of chromatography systems, such as pumps, detectors or analysers. In some embodiments, the inlet tube retainer 166 and outlet tube retainer 168 may be configured to secure an inlet tube sealing cap 176 and an outlet tube sealing cap 178 of the inlet tube 102 and the outlet tube 104, respectively where the inlet tube sealing cap 176 may be configured to be connected to the inlet tube fluidic fitting 106 (e.g., via a threaded connection) coupled to the end of the inlet tube 102, and the outlet tube sealing cap 178 may be configured to be connected to the outlet tube fluidic fitting 108 (e.g., via a threaded connection) coupled to the end of the outlet tube 104.

When the inlet and outlet tubes 102, 104 are disconnected from other components of chromatographic systems, e.g., for storage and/or shipping purposes, it is crucial that the integrity of the packed column be maintained, and that requires ensuring that the contents of the packed column are retained therein. Accordingly, the inlet tube fluidic fitting 106 and the outlet tube fluidic fitting 108 may be closed off via an inlet tube sealing cap 176 and an outlet tube sealing cap 178, respectively. That is, in embodiments, the inlet tube retainer 166 and outlet tube retainer 168 are sized such that the inlet tube sealing cap 176 and outlet tube sealing cap 178 may be received within second bore 167 and third bore 169, respectively, e.g., by being pressed therein to create interference fits, which keeps the chromatography column in a state where the risk of damage is reduced while also maintaining the integrity of the packed column, as shown in FIG. 2. Moreover, the material of the inlet tube retainer 166 and the outlet tube retainer 168 may be selected to achieve this interference fit, and may, like the tube gripping portion 164, be a polymeric material such as polyether ether ketone (PEEK), ethylene-based polymers, propylene-based polymers (including glass-filled polypropylene), nylon, acrylonitrile butadiene styrene. The inlet and outlet tube sealing caps 176, 178 may have knurled surfaces to assist with retaining them in the inlet and outlet tube retainers 166, 168, respectively. Moreover, as discussed above with respect to the bore 165 of the tube gripping portion 164, each of the second bore 167 and the third bore 169 may be an open-sided bore forming a partial cylindrical recess extending through the clip 162, as shown for the embodiment depicted in FIGS. 2-5. For example, the surface defining the second and third bores 167, 169 may be a partial cylindrical segment that makes up from about 180° to about 270° of a full cylinder, such at from about 190° to about 270° of a full cylinder, 200° to about 270° of a full cylinder, or 210° to about 270° of a full cylinder. However, as explained above with respect to the bore 165 of the tube gripping portion 164, the second and third bores 167, 169 could have non-cylindrical geometries such as, for example, rectangular, square, of pentagon geometries (in cross section). In such embodiments, the inlet and outlet tube sealing caps 176, 178 received within the second and third bores 167, 169, respectively, may have corresponding geometries.

Accordingly, when the chromatography column 100 is in not in use, the inlet tube fluidic fitting 106 and the outlet tube fluidic fitting 108 may be attached to the inlet tube sealing cap 176 and outlet tube sealing cap 178, respectively, thereby keeping the chromatography column in a tidy state where the inlet tube 102 and outlet tube 104 are not prone to damage. However, when the chromatography column 100 is in use and with the inlet tube fluidic fitting 106 and the outlet tube fluidic fitting 108 connected to other components of chromatographic systems, the inlet tube sealing cap 176 and outlet tube sealing cap 178 may be retained within the clip 162 via interference fits, which prevents the sealing caps from becoming lost when the chromatography column 100 is in use.

According to a first aspect of the present disclosure, a chromatography column comprises: a main tube assembly comprising a main tube extending from an inlet end of the main tube assembly to an outlet end of the main tube assembly; an inlet adapter assembly coupled to the inlet end of the main tube assembly; an outlet adapter assembly coupled to the outlet end of the main tube assembly; and a clip comprising: an upper surface; a lower surface opposite the upper surface; and a tube gripping portion comprising a bore that extends from the upper surface to the lower surface, wherein receipt of the main tube within the bore of the tube gripping portion secures the clip to the main tube.

A second aspect includes the first aspect, wherein the clip is configured to be secured to the main tube via an interference fit between the tube gripping portion and the main tube.

A third aspect includes either one of the first or second aspects, wherein the clip comprises a polymeric material.

A fourth aspect includes the third aspect, wherein the polymeric material is selected from the group consisting of polyether ether ketone, ethylene-based polymers, propylene-based polymers, nylon, and acrylonitrile butadiene styrene.

A fifth aspect includes any one of the first through fourth aspects, wherein the upper surface of the clip defines a flat edge oriented perpendicular to a central axis of the main tube when the clip is secured to the main tube.

A sixth aspect includes any one of the first through fourth aspects, wherein: the upper surface of the clip defines a first flat edge oriented perpendicular to a central axis of the main tube when the clip is secured to the main tube; and the lower surface of the clip defines a second flat edge oriented perpendicular to the central axis of the main tube when the clip is secured to the main tube.

A seventh aspect includes any one of the first through sixth aspects, wherein the main tube comprises bed height graduations.

An eighth aspect includes any one of the first through seventh aspects, wherein the bore of the tube gripping portion is an open-sided bore forming a partial cylindrical recess extending through the clip.

A ninth aspect includes any one of the first through eighth aspects, further comprising: an inlet tube fluidly coupled to the inlet adapter assembly; and an outlet tube fluidly coupled to the outlet adapter assembly, wherein the clip further comprises an inlet tube retainer configured to secure an end portion of the inlet tube; and an outlet tube retainer configured to secure an end portion of the outlet tube.

A tenth aspect includes the ninth aspect, wherein: the inlet tube retainer comprises a second bore that extends through the clip; and the outlet tube retainer comprises a third bore that extends through the clip.

A eleventh aspect includes the tenth aspect, wherein: the second bore extends from the upper surface of the clip to the lower surface of the clip; and the third bore extends from the upper surface of the clip to the lower surface of the clip.

A twelfth aspect includes either one of the tenth or eleventh aspects, wherein: an inlet tube sealing cap is received within the second bore and maintained within the second bore via an interference fit, wherein the inlet tube sealing cap is configured to be connected to an inlet tube fluidic fitting coupled to the end of the inlet tube; and an outlet tube sealing cap is received within the third bore and maintained within the third bore via an interference fit, wherein the outlet tube sealing cap is configured to be connected to an outlet tube fluidic fitting coupled to the end of the outlet tube.

A thirteenth aspect includes the twelfth aspect, wherein: the inlet tube sealing cap is configured to be connected to the inlet tube fluidic fitting via a threaded connection; and the outlet tube sealing cap is configured to be connected to the outlet tube fluidic fitting via a threaded connection.

A fourteenth aspect includes any one of the tenth through thirteenth aspects, wherein each of the bore of the tube gripping portion, the second bore of the inlet tube retainer, and the third bore of the outlet tube retainer is an open-sided bore forming a partial cylindrical recess extending through the clip.

According to a fifteenth aspect of the present disclosure, a clip comprises: an upper surface; a lower surface opposite the upper surface; a tube gripping portion comprising a bore that extends from the upper surface to the lower surface; an inlet tube retainer comprising a second bore that extends through the clip; and an outlet tube retainer comprising a third bore that extends through the clip.

A sixteenth aspect includes the fifteenth aspect, wherein the clip comprises a polymeric material.

A seventeenth aspect includes the sixteenth aspect, wherein the polymeric material is selected from the group consisting of polyether ether ketone, ethylene-based polymers, propylene-based polymers (including glass-filled polypropylene), nylon, and acrylonitrile butadiene styrene.

An eighteenth aspect includes any one of the fifteenth through seventeenth aspects, wherein: the upper surface of the clip defines a first flat edge; and the lower surface of the clip defines a second flat edge parallel to the first flat edge.

A nineteenth aspect includes any one of the fifteenth through eighteenth aspects, wherein: the second bore extends from the upper surface of the clip to the lower surface of the clip; and the third bore extends from the upper surface of the clip to the lower surface of the clip.

A twentieth aspect includes any one of the fifteenth through nineteenth aspects, wherein the bore of the tube gripping portion is an open-sided bore forming a partial cylindrical recess extending through the clip.

A twenty-first aspect includes any one of the fifteenth through nineteenth aspects, wherein each of the bore of the tube gripping portion, the second bore of the inlet tube retainer, and the third bore of the outlet tube retainer is an open-sided bore forming a partial cylindrical recess extending through the clip.

Reference throughout this specification to "one embodiment," "certain embodiments," "various embodiments," "one or more embodiments" or "an embodiment" means that a particular feature, structure, material, or characteristic described in connection with the embodiment is included in at least one embodiment of the disclosure. Thus, the appearances of the phrases such as "in one or more embodiments," "in certain embodiments," "in embodiments," "in various embodiments," "in one embodiment," or "in an embodiment" in various places throughout this specification are not necessarily referring to the same embodiment, or to only one embodiment. Furthermore, the particular features, structures, materials, or characteristics may be combined in any suitable manner in one or more embodiments.

It is also understood that, unless otherwise specified, terms such as "top," "bottom," "outward," "inward," and the like are words of convenience and are not to be construed as limiting terms. In addition, whenever a group is described as comprising at least one of a group of elements and combinations thereof, it is understood that the group may comprise, consist essentially of, or consist of any number of those elements recited, either individually or in combination with each other. Similarly, whenever a group is described as consisting of at least one of a group of elements or combinations thereof, it is understood that the group may consist of any number of those elements recited, either individually or in combination with each other. Unless otherwise specified, a range of values, when recited, includes both the upper and lower limits of the range as well as any ranges therebetween.

As used herein, the indefinite articles "a," "an," and the corresponding definite article "the" mean "at least one" or "one or more," unless otherwise specified. It also is understood that the various features disclosed in the specification and the drawings can be used in any and all combinations.

It is noted that the terms "substantially" and "about" may be utilized herein to represent the inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue.

It is noted that recitations herein of a component of the present disclosure being "configured" in a particular way, to embody a particular property, or to function in a particular manner, are structural recitations, as opposed to recitations of intended use. More specifically, the references herein to the manner in which a component is "configured" denotes an existing physical condition of the component and, as such, is to be taken as a definite recitation of the structural characteristics of the component.

Having described the subject matter of the present disclosure in detail and by reference to specific embodiments thereof, it is noted that the various details disclosed herein should not be taken to imply that these details relate to elements that are essential components of the various embodiments described herein, even in cases where a particular element is illustrated in each of the drawings that accompany the present description. Further, it will be apparent that modifications and variations are possible without departing from the scope of the present disclosure.

## Claims

1. A chromatography column (100) comprising:
a main tube assembly (110) comprising a main tube (111) extending from an inlet end (114a) of the main tube assembly (110) to an outlet end (114b) of the main tube assembly (110);
an inlet adapter assembly (120) coupled to the inlet end (114a) of the main tube assembly (110);
an outlet adapter assembly (130) coupled to the outlet end (114b) of the main tube assembly (110); and
a clip (162) comprising:
an upper surface (162a);
a lower surface (162b) opposite the upper surface (162a); and
a tube gripping portion (164) comprising a bore (165) that extends from the upper surface (162a) to the lower surface (162b), wherein receipt of the main tube (111) within the bore (165) of the tube gripping portion (164) secures the clip (162) to the main tube (111).

2. The chromatography column (100) of claim 1, wherein the clip (162) is configured to be secured to the main tube (111) via an interference fit between the tube gripping portion (164) and the main tube (111).

3. The chromatography column (100) of either one of claims 1 or 2, wherein the clip (162) comprises a polymeric material.

4. The chromatography column (100) of any one of claims 1 to 3, wherein the upper surface (162a) of the clip (162) defines a flat edge oriented perpendicular to a central axis of the main tube (111) when the clip (162) is secured to the main tube (111).

5. The chromatography column (100) of any one of claims 1 to 3, wherein:
the upper surface (162a) of the clip (162) defines a first flat edge (162c) oriented perpendicular to a central axis of the main tube (111) when the clip (162) is secured to the main tube (111); and
the lower surface (162b) of the clip (162) defines a second flat edge (162d) oriented perpendicular to the central axis of the main tube (111) when the clip (162) is secured to the main tube (111).

6. The chromatography column (100) of any one of claims 1 to 5, further comprising:
an inlet tube (102) fluidly coupled to the inlet adapter assembly (120); and
an outlet tube (104) fluidly coupled to the outlet adapter assembly (130), wherein the clip (162) further comprises
an inlet tube retainer (166) configured to secure an end portion of the inlet tube (102); and
an outlet tube retainer (168) configured to secure an end portion of the outlet tube (104).

7. The chromatography column (100) of claim 6, wherein:
the inlet tube retainer (166) comprises a second bore (167) that extends through the clip (162); and
the outlet tube retainer (168) comprises a third bore (169) that extends through the clip (162).

8. The chromatography column (100) of claim 7, wherein:
the second bore (167) extends from the upper surface (162a) of the clip (162) to the lower surface (162b) of the clip (162); and
the third bore (169) extends from the upper surface (162a) of the clip (162) to the lower surface (162b) of the clip (162).

9. The chromatography column (100) of either one of claims 7 or 8, wherein:
an inlet tube sealing cap (176) is received within the second bore (167) and maintained within the second bore (167) via an interference fit, wherein the inlet tube sealing cap (176) is configured to be connected to an inlet tube fluidic fitting (106) coupled to the end of the inlet tube (102); and
an outlet tube sealing cap (178) is received within the third bore (169) and maintained within the third bore (169) via an interference fit, wherein the outlet tube sealing cap (178) is configured to be connected to an outlet tube fluidic fitting (108) coupled to the end of the outlet tube (104).

10. The chromatography column (100) of claim 9, wherein:
the inlet tube sealing cap (176) is configured to be connected to the inlet tube fluidic fitting (106) via a threaded connection; and
the outlet tube sealing cap (178) is configured to be connected to the outlet tube fluidic fitting (108) via a threaded connection.

11. A clip (162) comprising:
an upper surface (162a);
a lower surface (162b) opposite the upper surface (162a);
a tube gripping portion (164) comprising a bore that extends from the upper surface (162a) to the lower surface (162b);
an inlet tube retainer (166) comprising a second bore (167) that extends through the clip (162); and
an outlet tube retainer (168) comprising a third bore (169) that extends through the clip (162).

12. The clip (162) of claim 15, wherein the clip (162) comprises a polymeric material.

13. The clip (162) of either one of claims 11 or 12, wherein:
the upper surface (162a) of the clip (162) defines a first flat edge (162c); and
the lower surface (162b) of the clip (162) defines a second flat edge (162d) parallel to the first flat edge (162c).

14. The clip (162) of any one of claims 11 to 13, wherein:
the second bore (167) extends from the upper surface (162a) of the clip (162) to the lower surface (162b) of the clip (162); and
the third bore (169) extends from the upper surface (162a) of the clip (162) to the lower surface (162b) of the clip (162).

15. The clip (162) of any one of claims 11 to 14, wherein the bore of the tube gripping portion (164) is an open-sided bore forming a partial cylindrical recess extending through the clip.
